# EUROPÄISCHE PATENTSCHRIFT

(11) **EP 3 008 261 B1**
(45) Veröffentlichungstag und Bekanntmachung des Hinweises auf die Patenterteilung: **05.04.2017**
(21) Anmeldenummer: 14730809.2
(22) Anmeldetag: 04.06.2014
(51) Int. Cl.: E04C 2/288, E04C 2/36, B31D 3/00, B32B 3/12

(54) **SANDWICH-BAUELEMENT SOWIE VERFAHREN ZU DESSEN HERSTELLUNG**
STRUCTURAL SANDWICH ELEMENT AND METHOD FOR PRODUCING SAME
ÉLÉMENT DE CONSTRUCTION SANDWICH ET PROCÉDÉ POUR LE FABRIQUER

(30) Priorität: 13.06.2013 DE 102013106174; 16.08.2013 DE 102013108874
(43) Veröffentlichungstag der Anmeldung: 20.04.2016
(73) Patentinhaber: Iseli, Fredy, 8592 Uttwil (CH)
(72) Erfinder: Iseli, Fredy, 8592 Uttwil (CH)
(74) Vertreter: Wagner, Kilian
(86) Internationale Anmeldenummer: PCT/EP2014/061608
(87) Internationale Veröffentlichungsnummer: WO 2014/198609

(56) Entgegenhaltungen:
- AT-B- 219 252
- CH-A- 356 899
- DE-A1- 19 654 672
- DE-A1-102011 109 122
- DE-U- 1 939 296
- FR-A- 1 135 130
- US-A- 3 857 217
- US-A- 4 150 175
- US-B1- 6 256 959

## Beschreibung

Die Erfindung betrifft ein Sandwich-Bauelement, insbesondere zum Einsatz als tragendes Element in Bauwerken, beispielsweise als Haus- oder Raumwand, als Boden- oder Deckenelement oder als Brückenelement gemäß dem Oberbegriff des Anspruchs 1, wobei das Sandwich-Bauelement mindestens einen Zellstoff-Wabenkern, insbesondere einen Papier- oder Pappe-Wabenkern aufweist, der zwischen mindestens zwei Deckschichten aufgenommen ist. Ferner betrifft die Erfindung ein Verfahren zum Herstellen eines solchen Sandwich-Bauelements sowie ein System, umfassend mindestens zweier solcher Sandwich-Bauelemente, die nebeneinander angeordnet sind.

Zellstoff-Wabenkerne sind beispielsweise in der DE 10 305 747 A1, der DE 19 654 672 A1 sowie der DE 19 820 493 A1 beschrieben.

Derartige Sandwich-Bauelemente haben sich bewährt, insbesondere dann, wenn der Zellstoff-Wabenkern mit einer Imprägnierbeschichtung zum Erhöhen der Feuer- und/oder Wasserfestigkeit und/oder der mechanischen Stabilität beschichtet ist. Aus der WO 2012/045653 ist es bekannt, sogenannte Wabenverbundtragteile (Zellstoff-Wabenkerne) im Vakuum mittels einer Zementbeschichtung (Imprägnierbeschichtung) zu versehen, wobei der beschichtete Zellstoff-Wabenkern als Kernschicht zwischen Holz-, Pappe-, geschäumtem Kunststoff- oder Sperrholzschichten aufgenommen werden kann.

Die US 3 857 217 A sowie die US 3 106 503 A beschreiben jeweils ein Sandwich-Bauelement mit einem Zellstoff-Wabenkern, der zwischen einer ersten und einer zweiten Deckschicht aus Beton aufgenommen ist, wobei der Zellstoff -Wabenkern in diese Deckschichten hineinragt.

Bekannte Sandwich-Bauelemente haben sich bewährt - der Erfindung liegt die Aufgabe zugrunde ein alternatives Sandwich-Bauelement vorzuschlagen, welches sich durch eine erhöhte Festigkeit und Tragkraft auszeichnet. Ferner besteht die Aufgabe darin, ein Verfahren zum Herstellen eines solchen Sandwich-Bauelementes anzugeben sowie ein System, umfassend mindestens zwei nebeneinander angeordnete Sandwich-Bauelemente.

Diese Aufgabe wird hinsichtlich des Sandwich-Bauelementes mit den Merkmalen des Anspruchs 1, hinsichtlich des Verfahrens mit den Merkmalen des Anspruchs 7 und hinsichtlich des Systems mit den Merkmalen des Anspruchs 14 gelöst. Vorteilhafte Weiterbildungen der Erfindung sind in den Unteransprüchen angegeben. In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, als eine erste und/oder zweite Deckschicht eine Hochleistungsbeton-Deckschicht einzusetzen, die ganz besonders bevorzugt aus fließfähigem Hochleistungsbeton, beispielsweise der von der Firma Dyckerhoff AG unter der Marke "Flowstone" vertriebene Hochleistungsbeton, hergestellt ist. Die Deckschichten schließen dabei die Kanäle des Zellstoff-Wabenkerns ab. Durch den Einsatz von Hochleistungsbeton als erste und/oder zweite Deckschicht wird die Tragfähigkeit des Sandwich-Bauelementes erheblich erhöht und zudem wird die Feuerfestigkeit wesentlich verbessert. Das nach dem Konzept der Erfindung ausgebildete Sandwich-Bauelement kann insbesondere als Wandelement, Decken- oder Bodenelement oder als Brücken-Tragelement im Baubereich eingesetzt werden. Gegenüber Sandwich-Bauelementen ohne Zellstoff-Wabenkern zeichnet sich das erfindungsgemäße Sandwich-Bauelement durch ein vergleichsweise geringes Gewicht und Schall- sowie Wärmedämmeigenschaften aus, insbesondere dann, wenn, was weiterbildungsgemäß vorgesehen kann, die Kanäle mit entsprechendem Dämmmaterial gefüllt sind.

Gemäß einer Ausgestaltungsvariante des Sandwich-Bauelementes liegt der Erfindung der Gedanke zugrunde, als eine erste oder zweite Deckschicht eine Gips-Deckschicht einzusetzen, insbesondere in der Art einer Gipskartonplatte. Dabei wird unter einer Gips-Deckschicht im weitesten Sinne eine Deckschicht verstanden, die Gips enthält. Bevorzugt besteht die Gips-Deckschicht zu zumindest 50 Gewichts-% aus Gips, ganz besonders bevorzugt aus zumindest näherungsweise 100 Gewichts-%. Gegebenenfalls können dem Gips weitere Bestandteile, beispielsweise Kalk oder, wie später noch erläutert werden wird, Fasern und dgl. Material beigemischt sein. Die erste oder zweite als Gips-Deckschicht ausgebildete Deckschicht schließt dabei die Kanäle des Zellstoff-Wabenkerns ab. Durch den Einsatz von Gips als Bestandteil der ersten oder zweiten Deckschicht wird die Feuerfestigkeit bei vergleichsweise geringem Gewicht erheblich erhöht.

Auch ist es möglich eine Gips-Deckschicht und zusätzlich eine Beton-Deckschicht vorzusehen.

Die Tragfähigkeit des Sandwich-Bauelementes kann insbesondere über die Wahl der Deckschichtstärke eingestellt werden.

Das nach dem Konzept der Erfindung ausgebildete Sandwich-Bauelement kann insbesondere als nicht-tragendes Element, beispielsweise als Wandelement im Hausbau eingesetzt werden. Gegenüber Sandwich-Bauelementen ohne Zellstoff-Wabenkern zeichnet sich das erfindungsgemäße Sandwich-Bauelement durch ein sehr geringes Gewicht sowie gute Schall- und Wärmedämmeigenschaften aus. Insbesondere dann, wenn, was weiterbildungsgemäß vorgesehen ist, die Kanäle mit entsprechendem Dämmmaterial gefüllt sind.

Ganz besonders bevorzugt beträgt die Dicke der mindestens einen Gips-Deckschicht (im Falle des Vorsehens einer solchen Deckschicht) zwischen etwa 0,5 und 2 cm, ganz besonders bevorzugt zwischen etwa 10 mm und 15 mm, wobei es noch weiter bevorzugt ist, wenn die mindestens eine Gips-Deckschicht eine Rohdichte zwischen etwa 600 und 800 kg/m³, vorzugsweise zwischen 650 und 750 kg/m³ aufweist.

Die Dickenerstreckung des Zellstoff-Wabenkerns kann an die gewünschte Gesamtstärke des Sandwich-Bauelementes angepasst werden. Die Gesamtdicke des Sandwich-Bauelementes beträgt vorzugsweise zwischen etwa 70 mm und 300 mm, bevorzugt zwischen etwa 40 mm und 250 mm, bevorzugt zwischen 50 mm und 250 mm ganz besonders bevorzugt zwischen etwa 75 mm und 150 mm, besonders bevorzugt zwischen etwa 50mm und 150 mm, wobei der Zellstoff-Wabenkern ganz besonders bevorzugt eine Dickenerstreckung zwischen 20 mm und 190 mm aufweist, ganz besonders bevorzugt zwischen etwa 30 mm und 130 mm. Bevorzugt beträgt die Dichte des imprägnierten Zellstoff-Wabenkerns zwischen etwa 150 und 200 kg/m³.

Im Hinblick auf die Anordnung der ersten und/oder zweiten Deckschicht gibt es unterschiedliche Möglichkeiten. Wesentlich ist, dass der Zellstoff-Wabenkern zwischen den Deckschichten aufgenommen ist, wobei es möglich und bevorzugt ist, dass zumindest eine der Deckschichten, bevorzugt beide Deckschichten unmittelbar an den Zellstoff-Wabenkern angrenzen und/oder die äußersten Schichten des Sandwich-Bauelementes bilden. Denkbar ist es jedoch, alternativ zwischen dem Zellstoff-Wabenkern und mindestens einer der Deckschichten mindestens eine weitere (Zwischen-) Schicht vorzusehen, oder außerhalb zumindest einer der beiden Deckschichten eine weitere Schicht, die dann eine äußerste Schicht des Sandwich-Bauelementes bildet.

Ganz besonders bevorzugt ist ein Aufbau des Sandwich-Bauelementes, bei dem dieses nicht nur ein einziger Zellstoff-Wabenkern aufweist (was alternativ möglich ist), sondern mindestens zwei parallel zueinander ausgerichtete Zellstoff-Wabenkerne umfasst, wobei diese Zellstoff-Wabenkerne eingefasst bzw. aufgenommen sind zwischen zwei Deckschichten. Möglich ist selbstverständlich auch eine Anordnung mit mehr als zwei Zellstoff-Wabenkernen, insbesondere ausschließlich drei Zellstoff-Wabenkernen, wobei benachbarte Zellstoff-Wabenkerne bevorzugt miteinander verklebt sind, beispielsweise unmittelbar miteinander verklebt sind oder alternativ mittelbar, insbesondere mit einer Zwischenschicht, beispielsweise einer Holzplatte verklebt sind, die insofern dann das Bindeglied zwischen zwei benachbarten Zellstoff-Wabenkernen bildet. Wesentlich ist jedenfalls, dass der einzige Zellstoff-Wabenkern oder gegebenenfalls mehrere parallel angeordnete, aneinander festgelegte Zellstoff-Wabenkerne angeordnet sind zwischen zwei Deckschichten, von denen mindestens eine als Hochleistungsbeton-Deckschicht ausgebildet ist. Gegebenenfalls kann außerhalb mindestens einer der Deckschichten mindestens eine weitere Schicht vorgesehen sein, oder die Deckschichten können die äußersten Schichten des Sandwich-Bauelementes bilden.

Besonders bevorzugt ist nun eine Ausgestaltungsvariante, bei der ein mit einer einzigen Hochleistungsbeton Deckschicht versehener Zellstoff-Wabenkern unmittelbar oder mittelbar an einem weiteren Zellstoff-Wabenkern, beispielsweise durch unmittelbares Verkleben oder Verkleben an einer Zwischenplatte fixiert ist und dieser weitere Zellstoff-Wabenkern oder ein dritter, d.h. noch ein weiterer Zellstoff-Wabenkern auf der der ersten Deckschicht abgewandten Seite mit einer zweiten Deckschicht versehen ist, die ganz besonders bevorzugt als Beton-Deckschicht oder Gips-Deckschicht ausgebildet ist.

Bevorzugt ist der Zellstoff-Wabenkern dabei derart angeordnet, dass sich die Kanäle senkrecht zur Flächenerstreckung des Sandwich-Bauelementes, d.h. senkrecht zu den Außenflächen erstreckt.

Wie erläutert, ist es besonders bevorzugt, wenn gemäß einer Variante der Erfindung die erste und/oder die zweite Deckschicht aus sogenanntem zur Verarbeitung zunächst stark fließfähigem Hochleistungsbeton ausgebildet ist, wobei sich ein derartiger Hochleistungsbeton bevorzugt durch eine Druckfestigkeit von ≥ 65N/mm² auszeichnet. Bevorzugt beträgt der Zementanteil des zum Einsatz kommenden Betons zwischen 380kg/m³ und 450kg/m³ oder mehr. Ganz besonders bevorzugt enthält der Hochleistungsbeton Zusätze von Mikrosilika, wodurch Druckfestigkeiten von über 100N/mm² erreicht werden können. Besonders bevorzugt ist es, wenn der Hochleistungsbeton die Voraussetzungen der ÖN B 4710-1 erfüllt. Bevorzugt beträgt der W/B-Wert maximal 0,31 bei der Erstprüfung und maximal 0,34 bei Konformitäts-/Identitätsprüfungen. Die Konsistenz beträgt bevorzugt F45 oder höher, besonders zweckmäßig F52. Besonders beträgt die Frischtemperatur weniger als 27°C zur Vermeidung von Temperaturspannungen.

Im Hinblick auf die Ausgestaltung des Zellstoff-Wabenkerns gibt es unterschiedliche Möglichkeiten. Wesentlich ist, dass es sich um einen Wabenkörper aus Zellstoff, insbesondere aus Papier oder Pappe handelt. Dieser kann in an sich bekannter Weise auf unterschiedliche Arten hergestellt werden, beispielsweise durch das Miteinander-Verleimen mehrerer Wellpappelagen. Alternativ ist der Zellstoff-Wabenkern aus einem sogenannten expandierten Wabenkörper, d.h. aus einem auseinanderziehbaren Wabenelement hergestellt, wobei sich grundsätzlich Kraftliner Papier, Testliner Papiere oder Schrenzpapiere eignen. Bevorzugt handelt es sich bei dem Zellstoff-Wabenkern um einen Wellpappe-Wabenkörper, der ganz besonders bevorzugt ausgebildet ist, wie in der WO 2012/045653 in Zusammenhang mit Fig. 1 beschrieben.

Im Hinblick auf die Abmessungen der Sandwich-Bauelemente gibt es unterschiedliche Möglichkeiten. Bevorzugt werden diese in einer Breite von 625 mm oder 1250 mm bereitgestellt und in Längen zwischen etwa 2000 und 3000 mm.

Bei einer Ausführungsform ist es denkbar nur an einer Seite eine Hochleistungsbeton Deckschicht einzusetzen an der gegenüberliegenden Seite eine Nicht-Beton-Schicht, beispielsweise eine Gips-, Holz- oder Kunststoffschicht. Auch ist es denkbar, auf beiden Seiten unterschiedlich dicke Deckschichten einzusetzen, um somit die Festigkeit, den Schalldämmwert und dergleichen optimal einstellen zu können.

Im Hinblick auf die Ausgestaltung des Zellstoff-Wabenkerns gibt es unterschiedliche Möglichkeiten. Wesentlich ist, dass es sich um einen Wabenkörper aus Zellstoff, insbesondere aus Papier oder Pappe handelt. Dieser kann in an sich bekannter Weise auf unterschiedliche Arten hergestellt werden, beispielsweise durch das Miteinander-Verleimen mehrerer Wellenpappenlagen. Alternativ ist der Zellstoff-Wabenkern aus einem sogenannten expandierten Wabenkörper, d.h. aus einem auseinanderziehbaren Wabenelement hergestellt, wobei sich grundsätzlich Kraftlinerpapier, Testlinerpapiere oder Schrenzpapiere eignen. Bevorzugt handelt es sich bei dem Zellstoff-Wabenkern um einen Wellpappe-Wabenkörper, der ganz besonders bevorzugt ausgebildet ist, wie in der WO 2012/045653 im Zusammenhang mit Fig. 1 beschrieben.

Als besonders vorteilhaft hat es sich für den Fall der Realisierung mindestens eine Hochleistungsbeton-Deckschicht herausgestellt, wenn die Dicke der ersten und/oder zweiten Hochleistungsbeton-Deckschicht aus einem Wertebereich zwischen 5mm und 40mm, ganz besonders bevorzugt zwischen 8mm und 30mm gewählt ist. Besonders bevorzugt beträgt die Dicke 15mm.

Erfindungsgemäß sind die Kanäle (Waben) des Zellstoff-Wabenkerns, bevorzugt vollumfänglich und axial durchgehend, mit einer mineralischen Imprägnierbeschichtung auf Zementbasis zum Erhöhen der Feuer- und/oder Wasserfestigkeit und/oder der mechanischen Stabilität beschichtet. Dabei kann die Beschichtung bevorzugt ausgebildet sein wie in der WO 2012/045653 beschrieben. Die erste und/oder zweite (Hochleistungsbeton) Deckschicht ragt, wie später noch erläutert werden wird, bevorzugt senkrecht zur Flächenerstreckung des Sandwich-Bauelementes, in die Kanäle (Waben) des Zellstoff-Wabenkerns hinein und grenzt dort an die Imprägnierbeschichtung an und ist vorzugsweise innig bzw. fest mit dieser verbunden.

Wie eingangs erwähnt, ist grundsätzlich möglich, dass zwischen Zellstoff-Wabenkern und mindestens einer der Deckschichten eine weitere Plattenschicht vorgesehen ist, wobei es besonders bevorzugt ist, wenn der Zellstoff-Wabenkern und die erste und/oder zweite Deckschicht unmittelbar benachbart sind. Insbesondere für eine derartige Ausgestaltung gibt es unterschiedliche Herstellungsmöglichkeiten. Eine besonders einfache Möglichkeit besteht darin, die erste und/oder zweite als Hochleistungsbeton-Deckschicht ausgebildete Deckschicht mit dem Zellstoff-Wabenkern durch einen geeigneten Klebstoff miteinander flächig zu verkleben. Alternativ und bevorzugt wird jedoch auf einen zusätzlichen Klebstoff verzichtet und/oder die erste und oder zweite Deckschicht verbindet sich innig mit dem Zellstoff-Wabenkern beim Aushärten derselben. Bevorzugt ist es hierzu, wenn der Zellstoff-Wabenkern während des Aushärtens in den zumindest noch feuchten, bevorzugt hoch fließfähigen, Hochleistungsbeton hineinragt, damit eine Verbindung zwischen Zellstoff-Wabenkern und erster und/oder zweiter Deckschicht nicht nur randseitig, d.h. an den Flächenseiten des Zellstoff-Wabenkerns realisiert wird, sondern auch innerhalb der sich bevorzugt senkrecht zur Flächenerstreckung des Zellstoff-Wabenkerns bzw. des Sandwich-Bauelementes erstreckenden Kanäle. Der Zellstoff-Wabenkern ragt mindestens 0,5cm in den Hochleistungsbeton der ersten und/oder zweiten Deckschicht (senkrecht zu der Flächenerstreckung des Sandwich-Bauelements) hinein, bevorzugt um eine Strecke aus einem Wertebereich zwischen 0,5mm und 2/3 der Deckschichtdicke.

Dadurch, dass der Zellstoff-Wabenkern innerhalb der Kanäle mit einer mineralischen, auf Zementbasis hergestellten Imprägnierbeschichtung versehen ist, kann eine besonders gute Haftung der ersten und/oder zweiten Hochleistungsbeton-Deckschicht erreicht werden, wobei es ganz besonders bevorzugt ist, wenn die Imprägnierbeschichtung ebenfalls noch feucht ist, zumindest nicht vollständig ausgehärtet ist.

Im Hinblick auf die Herstellung einer derart innigen Verbindung, bei der der Hochleistungsbeton der ersten und/oder zweiten Deckschicht in die Kanäle des Zellstoff-Wabenkerns hineinragt gibt es unterschiedliche Möglichkeiten. Besonders bevorzugt ist eine Ausführungsvariante des Herstellungsverfahrens, bei der zunächst der Beton in eine Schalung, insbesondere auf einem Schalungstisch gegossen und der Zellstoff-Wabenkern auf den Beton, d.h. die Betonmasse gelegt und dann in die Betonmasse ein Stück weit eingebracht wird, wobei insbesondere verhindert werden soll, dass der Zellstoff-Wabenkern die Betonschicht vollständig durchsetzt, was jedoch alternativ realisierbar ist. Das Einbringen des Zellstoff-Wabenkerns in die Betonmasse erfolgt bevorzugt durch einvibrieren, wobei hierzu bevorzugt der Zellstoff-Wabenkern und/oder der Schalungstisch durch geeignete Vibrationselemente, bevorzugt einem Exzenterelement, in Vibration versetzt wird. Grundsätzlich kann die Vibration auch durch Schallwellen oder dergleichen Maßnahmen erreicht werden. Zusätzlich oder alternativ zu einem Einvibrieren ist es möglich mechanisch eine Relativverstellbewegung der Schalung, insbesondere des Schalungstisches und des Zellstoff-Wabenkerns zueinander zu realisieren, bevorzugt, indem der Zellstoff-Wabenkern senkrecht zu dessen Flächenerstreckung in den, bevorzugt noch fließfähigen Beton hineingedrückt wird. Eine weitere Alternative besteht darin, den Zellstoff-Wabenkern vor oder während des Einlassens des Betons in die Schalung den Zellstoff-Wabenkern so relativ in der Schalung zu positionieren, dass dieser teilweise so in die Schalung hineinragt, dass die Füllhöhe des Betons ausreicht, um die Kanäle von unten her abschnittsweise mit Beton zu befüllen.

Im Hinblick auf den Zeitpunkt des in Kontaktbringens, insbesondere des Hineinerstreckens des Zellstoff-Wabenkerns in den zumindest noch feuchten Beton zur Herstellung einer Beton-Deckschicht gibt es unterschiedliche Möglichkeiten. So ist denkbar vor dem Aushärten bzw. Abbinden der Imprägnierbeschichtung den Zellstoff-Wabenkern mit dem Beton in Kontakt zu bringen oder danach.

Für den bevorzugten Fall, dass beide, d.h. die erste und die zweite Deckschicht aus Hochleistungsbeton ausgebildet werden, ist es bevorzugt, wenn zunächst eine der Deckschichten, bevorzugt nach einer der zuvor beschriebenen Verfahrensmöglichkeiten hergestellt wird und dass, insbesondere nach dem zumindest teilweise Trocknen und/oder Abbinden der so hergestellten Beton-Deckschicht parallele weitere Beton-Deckschicht hergestellt wird, bevorzugt ebenfalls wieder nach einem der zuvor beschriebenen Verfahrensvarianten, insbesondere nach Verdrehen der Deckschicht-Zellstoff-Wabenkern-Kombination um 180° auf der der ersten Deckschicht gegenüberliegenden Seite des Zellstoff-Wabenkerns.

Im Hinblick auf die Herstellung einer innigen Verbindung zwischen der, mineralischen auf Zementbasis hergestellten Imprägnierbeschichtung und mindestens einer Gips-Deckschicht, bei der das Gipsmaterial bei der Herstellung der ersten oder zweiten Deckschicht in die Kanäle des Zellstoff-Wabenkerns hineinragt gibt es unterschiedliche Möglichkeiten. Besonders bevorzugt ist eine Ausführungsvariante des Herstellungsverfahrens, bei welchem zunächst fließfähiges Gipsmaterial bereitgestellt und der Zellstoff-Wabenkern in das Gipsmaterial eingetaucht wird. Bevorzugt wird das Gipsmaterial auf ein Förderband aufgebracht, auf welchem dann nacheinander in Reihe angeordnete Zellstoff-Wabenkerne in das Gipsmaterial eingebracht werden.

Ganz besonders bevorzugt ist es, wenn das Gipsmaterial auf eine Außenlage der jeweiligen Deckschicht aufgebracht wird, die insbesondere in der Art wie bei bekannten Gipskartonplatten, insbesondere aus Papier oder Pappe ausgebildet ist und den äußeren Abschluss der Deckschicht bildet.

Ganz besonders bevorzugt wird dabei diese Außenlage auf ein Förderband, insbesondere von einer Rolle aufgebracht und das Gipsmaterial auf der Außenlage geglättet, insbesondere gerakelt. Grundsätzlich ist es möglich, den Zellstoff-Wabenkern einfach auf das Gipsmaterial aufzulegen oder schwerkraftbedingt einsinken zu lassen. Bevorzugt ist es, wenn der Zellstoff-Wabenkern definiert ein Stück weit eingebracht wird in das Gipsmaterial, vorzugsweise derart, dass verhindert wird, dass der Zellstoff-Wabenkern das Gipsmaterial vollständig durchsetzt, was jedoch alternativ realisierbar ist, insbesondere wenn die vorgenannte Außenlage vorgesehen ist, da diese dann die Abwärtsbewegung des Zellstoff-Wabenkerns begrenzt und verhindert, dass der Zellstoff-Wabenkern bis an die Außenseite der jeweiligen Deckschicht ragt. Das Einbringen des Zellstoff-Wabenkerns in die Gipsmaterialmasse erfolgt bevorzugt durch Einvibrieren, wobei hierzu bevorzugt der Zellstoff-Wabenkern und/oder eine Fördereinrichtung durch geeignete Vibrationselemente, bevorzugt einem Exzenterelement in Vibration versetzt wird. Grundsätzlich kann die Vibration auch durch Schallwellen oder dgl. Maßnahmen erreicht werden. Zusätzlich oder alternativ zu einem Einvibrieren ist es möglich mechanisch eine Relativverstellung einer Trägeranordnung für das Gipsmaterial und dem Zellstoff-Wabenkern zu realisieren, bevorzugt indem der Zellstoff-Wabenkern senkrecht zu dessen Flächenerstreckung in das, bevorzugt noch fließfähige Gipsmaterial hineingedrückt wird. Eine weitere Alternative besteht darin, denn Zellstoff-Wabenkern vor oder während des Beaufschlagens mit Gipsmaterial, beispielsweise in einer Schaltung und/oder auf einem Förderband zu positionieren, so dass durch Hinzufügen des Gipsmaterials erreicht wird, dass der Zellstoff-Wabenkern in dieses Material hineinragt, wobei die Füllhöhe so bemessen sein sollte, dass die Kanäle des Zellstoff-Wabenkerns von unten her mit Gipsmaterial abschnittsweise gefüllt werden.

Im Hinblick auf den Zeitpunkt des Inkontaktbringens, insbesondere des Hineinerstreckens des Zellstoff-Wabenkerns in das zumindest noch feuchte Gipsmaterial zur Herstellung einer Deckschicht, gibt es unterschiedliche Möglichkeiten. So ist es denkbar, vor dem Aushärten bzw. Abbinden der Imprägnierbeschichtung den Zellstoff-Wabenkern mit dem Gipsmaterial in Kontakt zu bringen oder danach.

Erfindungsgemäß ragt die erste und/oder die zweite Deckschicht in die Kanäle des Zellstoff-Wabenkerns hineinragt. Dabei ist es grundsätzlich möglich, dass die erste und/oder zweite Deckschicht unmittelbar mit der Außenseite des Zellstoff-Wabenkerns abschließt, diesen also nicht oder nur minimal nach außen überragt. Bevorzugt ist jedoch eine Variante bei der die erste und/oder zweite Deckschicht den Zellstoff-Wabenkern nach außen in Richtung der Längserstreckung der Kanäle überragt, insbesondere um mehrere Millimeter.

Besonders bevorzugt ist es, wenn die Kanäle zur Optimierung der Wärme- und/oder Schalldämmeigenschaften des Sandwich-Bauelementes mit entsprechenden Dämmmaterialien aufgefüllt sind. Zur Erhöhung des Schalldämmwertes eignet sich insbesondere Quartzsand zur Befüllung der Waben (Kanäle). Der Wärmedämmwert kann beispielsweise durch das Einbringen von, insbesondere pyrogener Kieselsäure, noch weiter in Partikelform erhöht werden. Auch zusätzlich oder alternativ ist es denkbar, insbesondere geschäumte Kunststoffpartikel und/oder Polystyrolpartikel und/oder Porenbeton und/oder Recyclingmaterialpartikel und/oder Mineralschaumstoffpartikel zur Erhöhung der Dämmwirkung in den Kanälen vorzusehen.

Zur weiteren Erhöhung der Stabilität bzw. der Tragfähigkeit des Sandwich-Bauelementes ist es möglich, in der ersten und/oder zweiten als Hochleistungsbeton-Deckschicht ausgebildeten Deckschicht Armierungsmaterial, insbesondere in Form von Fasern, beispielsweise Glasfasern und/oder Netze, insbesondere Kunststoff- oder Metallnetze vorzusehen.

Besonders bevorzugt ist es, wenn das Sandwich-Bauelement, insbesondere im Bereich mindestens einer Schmalseite mit einer Anschlussgeometrie versehen ist, die es bevorzugt ermöglicht, zwei nebeneinander angeordnete Sandwich-Bauelemente in ihrer Anschlussrichtung überlappend anzuordnen. Dies kann beispielsweise durch eine Nut-Feder-Geometrie realisiert werden, wobei hierzu beispielsweise die Sandwich-Bauelemente an einer Schmalseite mit einer Nut an einer der gegenüberliegenden Schmalseiten einer Feder zum Einstecken in eine Nut einer als benachbarten Sandwich-Bauelementes ausgebildet sind. Alternativ ist es denkbar an beiden einander gegenüberliegenden Seiten eine Federgeometrie vorzusehen und ein Nut-Kupplungsstück einzusetzen. Ganz besonders bevorzugt ist es, an zumindest einer Schmalseite eine Nut vorzusehen und beispielsweise zwei benachbarte Sandwich-Bauelemente durch eine zusätzliche Feder miteinander zu verbinden.

Besonders zweckmäßig ist es, wenn die Anschlussgeometrie, insbesondere eine Nut zur Aufnahme einer Feder oder eine Feder zum Einstecken in eine Nut aus Beton ausgebildet ist, wobei es besonders bevorzugt ist, wenn die Anschlussgeometrie einteilig mit der ersten und/oder zweiten Deckschicht ausgebildet ist.

Die Erfindung führt auch auf ein System, umfassend mindestens zwei nebeneinander angeordnete Sandwich-Bauelemente, die fest miteinander verbunden sind. Es ist denkbar und bevorzugt, wenn sich die Sandwich-Bauelemente in Richtung ihrer Flächenerstreckung überlappen, was beispielsweise durch eine entsprechende seitliche, schmalseitige Anschlussgeometrie realisiert werden kann, beispielsweise in Form einer Nut-Feder-Verbindung, wobei hier, wie bereits erläutert, unterschiedliche Möglichkeiten bestehen.

So ist es denkbar, die Sandwich-Bauelemente nur mit Nuten zu versehen und die Verbindung mit einer separaten Feder herzustellen. Alternativ ist es denkbar die Sandwich-Bauelemente nur mit Federn auszustatten und die Verbindung über ein Nutverbindungselement zu realisieren. Auch ist es denkbar, insbesondere an einander gegenüberliegenden Schmalseiten eines Sandwich-Bauelementes Nut und Feder vorzusehen, sodass die Sandwich-Bauelemente ohne Adapterstücke überlappend ineinanderschiebbar sind. Besonders bevorzugt ist es, unabhängig von der konkreten Ausgestaltung der Anschlussgeometrie, wenn etwaige durch das Zusammenstoßen von zwei Sandwich-Bauelementen entstehende Hohlräume mit einem geeigneten Material, insbesondere Gipsmaterial oder Betonmaterial, insbesondere stark fließfähigem Beton vergossen sind bzw. werden.

Für den Fall der Realisierung einer Gips-Deckschicht ist es ganz besonderes bevorzugt, wenn eine Stoßstelle zwischen zwei benachbarten Platten außen von einer weiteren, insbesondere als Gips-Deckschicht ausgebildeten Überlappungsplatte überlappt werden, die noch weiter bevorzugt auf zwei benachbarten Gipsplatten, beispielsweise durch Verkleben oder Verschrauben oder dergleichen befestigt ist.

Ganz besonders bevorzugt ist eine Ausgestaltung des Systems, bei der zwei Sandwich-Bauelemente über ein Vergussmassenelement voneinander beabstandet bzw. aneinander festgelegt sind, wobei die Vergussmasse bzw. das Füllmaterial bevorzugt aus Beton ausgebildet ist. Insofern führt die Erfindung auch auf ein Verfahren zum Herstellen eines derartigen Systems, welches separat beanspruchbar sein soll. Gemäß diesem Verfahren werden zunächst zwei Sandwich-Bauelemente voneinander beabstandet angeordnet und der Abstand, welcher bevorzugt zunächst mit Armierungsmaterial versehen wird, wird mit einem Füllmaterial, d.h. einer Vergussmasse, insbesondere Beton aufgefüllt, um die Sandwich-Bauelemente so miteinander zu verbinden. Bevorzugt wird der Abstand zunächst zum Auffangen der Vergussmasse, d.h. des Füllmaterials außen verschalt. Auf diese Weise können Wandsysteme oder Deckensysteme ausgebildet werden, wobei im Falle von Deckensystemen die voneinander beabstandeten Sandwich-Bauelemente vorzugsweise zunächst auf Hilfsträger aufgelegt werden, die nach dem Aushärten der Vergussmasse, d.h. des Füllmaterials, insbesondere des Betons wieder entfernt werden können.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis 1c: Unterschiedliche Schritte zur Herstellung eines Sandwich-Bauelementes,
- Fig. 2: ein alternativer Herstellungsschritt,
- Fig. 3: ein nach dem Konzept der Erfindung ausgebildetes Sandwich-Bauelement,
- Fig. 4: eine Vorrichtung zur Durchführung eines Verfahrens zur Herstellung von nach dem Konzept der Erfindung ausgebildeten Sandwich-Bauelementen,
- Fig. 5: ein System, umfassend mehrere nebeneinander angeordnete Sandwich-Bauelemente, und
- Fig. 6: eine Explosionsdarstellung eines SandwichBauelementes mit insgesamt drei ZellstoffWabenkernen, die zwischen zwei Deckschichten aufgenommen sind,
- Fig. 7: eine Deckenkonstruktion mit wie in Fig. 6 gezeigten ausgebildeten Sandwich-Bauelementen,
- Fig. 8: ein weiteres alternatives Sandwich-Bauelement in einer Explosionsdarstellung mit insgesamt ausschließlich zwei Zellstoff-Wabenkernen, die zwischen zwei Deckschichten aufgenommen sind und
- Fig. 9: eine mit in Fig. 8 gezeigten Sandwich-Bauelementen hergestellte Wandkonstruktion.

In den Figuren sind gleiche Elemente und Elemente mit der gleichen Funktion mit den gleichen Bezugszeichen gekennzeichnet.

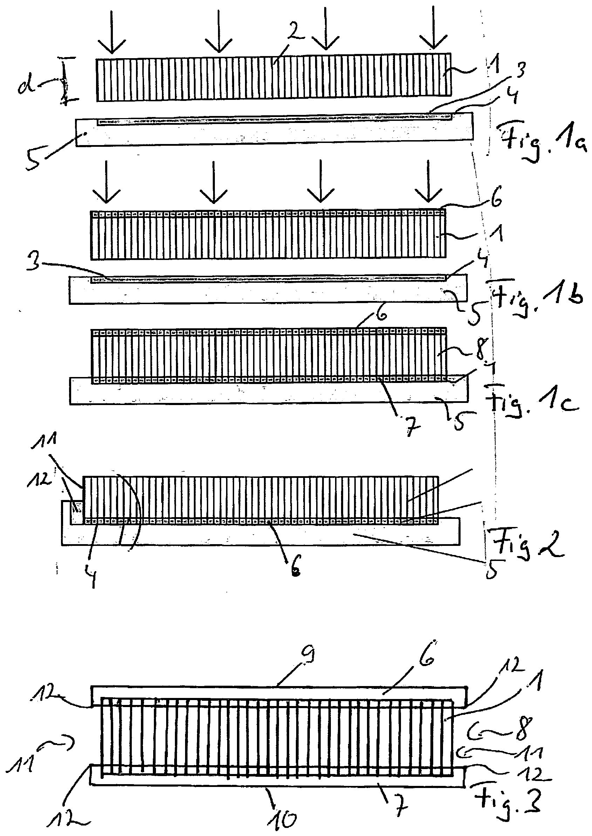

In Fig. 1a ist ein Herstellungsschritt zur Herstellung eines Sandwich-Bauelementes gezeigt. Zu erkennen ist ein plattenförmiger Zellstoff-Wabenkern 1, welcher eine Vielzahl von Waben, d.h. Kanälen 2 aufweist, die sich senkrecht zur Flächenerstreckung des Zellstoff-Wabenkerns 1 erstrecken, welcher in dem gezeigten Ausführungsbeispiel eine Dickenerstreckung d (Abstand zwischen den Flächenseiten) von 50mm aufweist. Die Kanäle 2 sind vollumfänglich und axial in Richtung der Dickenerstreckung d durchgehend beschichtet mit einer Imprägnierbeschichtung, hier beispielhaft auf Zementbasis. Die Pfeile in Fig. 1 a deuten eine Auflegerichtung an, in der der Zellstoff-Wabenkern 1 auf noch fließfähigen, bevorzugt hoch fließfähigen, Beton 3 in einer Schalung 4 aufgelegt wird. Die Schalung 4 wird in dem gezeigten Ausführungsbeispiel von einem Schalungstisch 5 gebildet. Nach dem Auflegen (nicht gezeigt) des Zellstoff-Wabenkerns 1 auf den Beton 3 wird der Zellstoff-Wabenkern 1 ein Stück weit in den Beton 3 versenkt, sodass die Kanäle 2 abschnittsweise mit dem Beton 3 gefüllt werden. Dieser Vorgang erfolgt in dem gezeigten Ausführungsbeispiel durch in Vibrationsversetzen des Zellstoff-Wabenkerns mittels einer geeigneten, von oben aufzubringenden Rütteleinrichtung und/oder durch in Schwingung versetzen des Schalungstisches 5. Bevorzugt wird der Zellstoff-Wabenkern 1 dabei nicht bis zum Grund der Schalung 4 versenkt, sondern bis auf eine Stelle mit Abstand zu diesem Grund, um eine geschlossene Betonschicht auf einer Außenseite zu garantieren. Selbstverständlich ist es grundsätzlich auch denkbar den Zellstoff-Wabenkern 1 bis auf den Grund der Schalung 4 zu versenken, wobei in diesem Fall der Zellstoff-Wabenkern 1 bis zur Außenseite der resultierenden Deckschicht ragt.

Der Zellstoff-Wabenkern 1 bleibt nun solange in dem Beton 3 in der Schalung 4 positioniert bis der Beton 3 soweit getrocknet und abgebunden ist, bis dass der Verbund aus Zellstoff-Wabenkern 1 und resultierender erster, als Beton-Deckschicht ausgebildeten Deckschicht 6 ein solche Festigkeit aufweist, dass er in die in Fig. 1b gezeigte, um 180° gedrehte Position verdrehbar ist. In Fig. 1b ist der Zellstoff-Wabenkern 1 mit der daran festgelegten ersten Deckschicht 6 aus Beton zu erkennen. Dieser Verbund wird nun in den Pfeilrichtungen gemäß Fig. 1b wiederum in eine Schalung 4 auf einem Schalungstisch 5, genauer auf den darin befindlichen Beton 3 aufgebracht, und wiederum bevorzugt durch vibrieren ein Stück weit in den Beton 3 versenkt, um so die zweite als Beton-Deckschicht ausgebildete Deckschicht 7 zu erzeugen, die parallel zur ersten Deckschicht 6 verläuft.

In dem gezeigten Ausführungsbeispiel besteht das aus dem Verfahren resultierende Sandwich-Bauelement 8 aus dem Zellstoff-Wabenkern 1, der bevorzugt etwa 100mm-200mm dick ist und den beiden Deckschichten 6, 7, die in dem gezeigten Ausführungsbeispiel eine bevorzugte Dicke zwischen 10mm und 25mm aufweisen. Wenn die zweite Deckschicht 7 ausreichend abgebunden ist, kann das resultierende Sandwich-Verbundelement aus der Schalung 4 des Schalungstisches 5 entnommen werden.

Der Beton 3 kann bei Bedarf mit einer Armierung, insbesondere Fasern und/oder Netzen verstärkt werden. Die Kanäle 2 können bei Bedarf mit geeignetem Dämmmaterial gefüllt sein.

In Fig. 1c sieht es aus zeichnerischen Gründen so aus, dass sich der Zellstoff-Wabenkern 1 bis an die Außenseiten der Deckschichten 6, 7 erstreckt, was grundsätzlich möglich ist. Bevorzugt ist es jedoch, wenn ein in Fig. 3 beispielhaft gezeigtes Sandwich-Bauelement 8 resultiert, bei welchem der Zellstoff-Wabenkern 1 innerhalb der Deckschichten 6, 7 aus Beton, d.h. mit Abstand zu den Außenflächen 9, 10 der Deckschichten 6, 7 endet, um somit eine glatte Außenoberfläche an den Deckschichten 6, 7 zu erhalten.

In Fig. 3 ist zu erkennen, dass die Schmalseiten 11 des Sandwich-Bauelementes als Nuten ausgebildet sind, d.h. es ist eine nutförmige Anschlussgeometrie 12 geschaffen worden, die einteilig ausgebildet ist mit den Deckschichten 6, 7 bzw. von diesen gebildet wird.

In die Nuten der Anschlussgeometrie 12 kann ein Federstück als Adapterstück eingesetzt werden, um somit zwei Sandwich-Bauelemente 8 an ihren Schmalseiten miteinander zu verbinden. Oder es ist denkbar in die Nut ein Sandwich-Bauelement mit einem Federanschlussprofil unmittelbar einzustecken.

In Fig. 2 ist ein Herstellungsverfahrensschritt mit einer alternativ ausgestalteten Schalung 4 gezeigt, bei welcher an einer Schmalseite 11 ein Anschlussprofil 12 unmittelbar mit ausgegossen bzw. an die erste Deckschicht 6 angeformt werden kann. Ein derartiges Anschlussprofil 12 bietet sich an, um zwei Anschlussprofile zweier benachbarter Sandwich-Bauelemente überlappend anzuordnen.

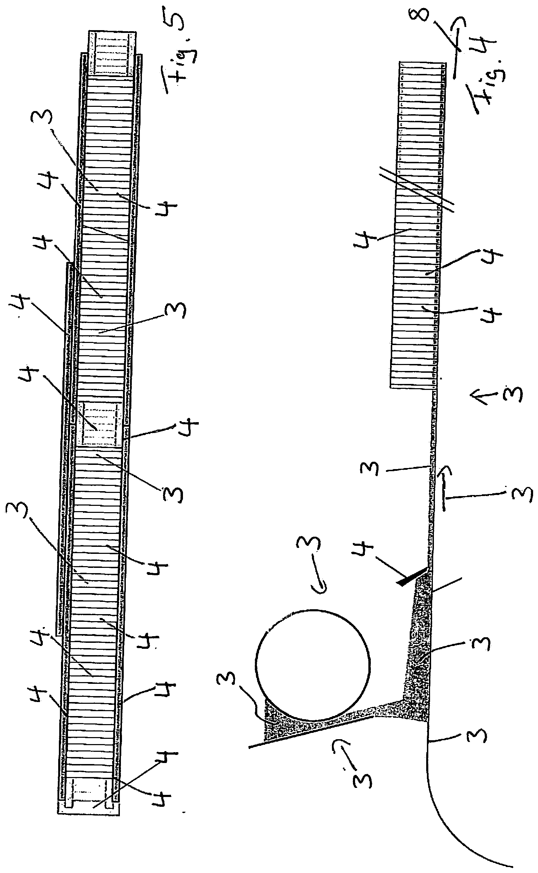

In Fig. 4 ist eine Vorrichtung 31 zur Herstellung von beispielhaft in Fig. 5 gezeigten Sandwich-Bauelementen 32 gezeigt. Die Vorrichtung 31 umfasst Zuführmittel 33 zum kontinuierlichen Zuführen von Gipsmaterial 34. Die Zuführmittel 33 umfassen dabei eine Gießvorrichtung 35 mittels welcher Gipsmaterial auf eine aus Papier ausgebildete Außenlage 36 gegossen wird. Die Außenlage 36 wird auf einem nicht gezeigten Förderband 37 in eine Förderrichtung 38 transportiert. In der Förderrichtung 38 nach einem Aufgießbereich 39, bei welchem das auf der Auflage 36 aufgebrachte Gipsmaterial 34 noch eine unzulässig hohe Dicke aufweist, sind Dickenbegrenzungsmittel 40 in der Form eines Rakels vorgesehen, wobei das Gipsmaterial in Förderrichtung 38 nach dem Rakel die gewünschte Dicke aufweist. In Förderrichtung 38 hinter der den Dickenbegrenzungsmitteln 40 werden Zellstoffwabenkerne 41 in oder auf das Gipsmaterial gesetzt, wobei hier auf die alternativen Möglichkeiten gemäß der allgemeinen Beschreibung verwiesen wird. In dem gezeigten Ausführungsbeispiel werden die Zellstoffwabenkerne 41 so in das Gipsmaterial 34 eingebracht, dass das Gipsmaterial in, hier mit einer auf Zementbasis hergestellten Imprägnierbeschichtung 42 beschichtete Kanäle 43 ein Stück weit mit dem Gipsmaterial aufgefüllt werden. Die Kanäle 43 verlaufen in dem gezeigten Ausführungsbeispiel senkrecht zur Förderrichtung 38.

In Förderrichtung 38 weiter hinten (nicht gezeigt) wird das Gipsmaterial zumindest teilweise ausgehärtet, wobei hierzu beispielsweise die Zellstoff-Wabenkerne mit dem Gipsmaterial auf entsprechende Träger aufgebracht und gestapelt werden. Nachdem die Gipsdeckschicht zumindest teilweise ausgehärtet ist, kann die zweite Deckschicht aufgebracht werden, insbesondere indem der mit der ersten Deckschicht versehene Zellstoffwabenkern um 180° gedreht und dann einer ähnlichen Vorrichtung zugeführt wird.

In Fig. 5 ist der grundsätzliche Aufbau von Sandwich-Bauelementen gezeigt. Diese umfassen ein Zellstoff-Wabenkern 31 mit einer Vielzahl von Kanälen 43, die an ihrem Innenumfang mit einer Imprägnierbeschichtung 42 auf Zementbasis beschichtet sind. Auf beiden Seiten des Zellstoff-Wabenkörpers 41 befindet sich eine als Gips-Deckschicht ausgebildete Deckschicht, wobei Sandwich-Bauteile 32 eine erste Deckschicht 44 und eine parallel dazu verlaufende Deckschicht 45 umfassen, die bevorzugt jeweils der Zellstoff-Wabenkern 41, beispielsweise wie in Fig. 4 angedeutet hineinragt. Alternativ können die Deckschichten auch mit dem Zellstoff-Wabenkern 41, beispielsweise über Verkleben verbunden sein.

Zu erkennen ist, dass die Deckschichten 44, 45 den Wabenkern 41 in Richtung seiner Schmalseite überragen und somit eine nutförmige Anschlussgeometrie 46 bilden, wobei in dem gezeigten Ausführungsbeispiel die Sandwich-Bauelemente 32 auf zwei einander gegenüberliegenden Schmalseiten einer Anschlussgeometrie 46 in Form einer Nut aufweisen, so dass zwei benachbarte Sandwich-Bauelemente 31 über ein Federelement 47, welches in die beiden von jeweils zwei Deckschichten begrenzten Nut-Anschlussgeometrien eintaucht. In dem gezeigten Beispiel sind zwei benachbarte zweite Deckschichten von benachbarten Sandwich-Bauelementen abschnittsweise überdeckt von einer Überlappungsplatte 48, die beispielsweise auch als Gipskartonplatte ausgebildet sein kann. Die Überlappungsplatte 48 überlappt dabei eine Stoßstelle der benachbarten Sandwich-Bauelemente.

Zu erkennen ist in der linken Zeichnungshälfte, dass die Anschlussgeometrie 46 auch mit einem Abschlussprofil 49 versehen werden kann, welches in die nutformige Anschlussgeometrie 46 eingreift.

Alternativ ausgestaltete Anschlussgeometrien, wie im allgemeinen Beschreibungsteil erläutert, sind alternativ realisierbar.

Ganz allgemein, d.h. nicht bezogen auf ein konkretes Ausführungsbeispiel sei hier nochmals erwähnt, dass die unter das Konzept der Erfindung fallenden Sandwich-Bauelemente eine unterschiedliche Anzahl von Zellstoff-Wabenkernen aufweisen können. So sind Sandwich-Bauelemente mit ausschließlich einem einzigen Zellstoff-Wabenkern realisierbar, der zwischen zwei Deckschichten aufgenommen ist, von denen mindestens eine als Hochleistungsbeton-Deckschicht ausgebildet ist. Denkbar ist auch alternativ eine Ausgestaltung mit mindestens oder ausschließlich zwei Zellstoff-Wabenkernen, die zwischen zwei Deckschichten aufgenommen sind, von denen eine Deckschicht als Hochleistungsbeton-Deckschicht ausgebildet ist. Auch denkbar ist es ein Sandwich-Bauelement mit drei, insbesondere genau drei Zellstoff-Wabenkernen zu realisieren oder mehr als drei Zellstoff-Wabenkernen, wobei auch hier die Anordnung von Zellstoff-Wabenkernen zwischen zwei Deckschichten aufgenommen ist, von denen mindestens eine als Hochleistungsbeton-Deckschicht ausgebildet ist.

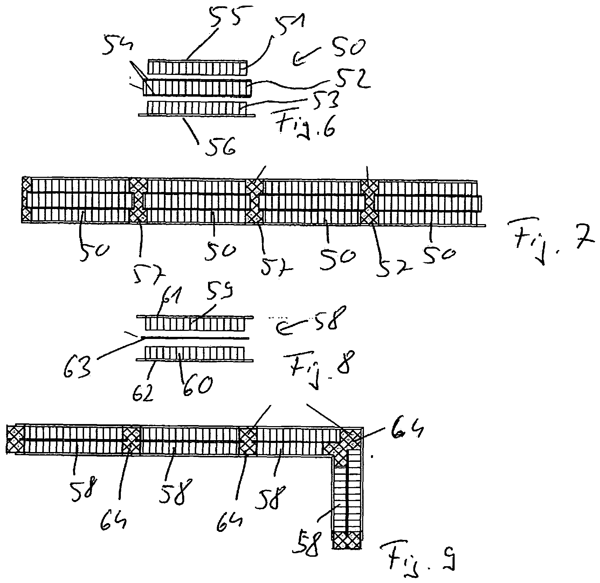

Dies vorausgeschickt werden nun die Ausführungsbeispiele gemäß den Fig. 6-9 beschrieben.

Fig. 6 zeigt eine Explosionsdarstellung eines Sandwich-Bauelementes 50, dieses umfasst insgesamt drei Zellstoff-Wabenkerne 51, 52, 53, wobei der mittlere Zellstoff-Wabenkern 52 in dem konkreten Ausführungsbeispiel über jeweils eine Kleberschicht 54 mit dem jeweils benachbarten Zellstoff-Wabenkern verklebt ist. Die äußeren Zellstoff-Wabenkerne 51, 53 tragen jeweils eine Deckschicht, nämlich eine erste Deckschicht 55 bzw. eine zweite Deckschicht. 56, wobei eine der Deckschichten 55, 56 aus Hochleistungsbeton ausgestaltet ist. Ganz besonders bevorzugt ragen die Zellstoff-Wabenkerne 51, 53 in die zugehörige Deckschicht 55 bzw. 56 senkrecht zu deren Flächenerstreckung hinein - anders ausgedrückt ist das Hochleistungsbeton der Deckschichten 55, 56 in die Kanäle der benachbarten Zellstoff-Wabenkerne 51 bzw. 53 eingedrungen.

Alternativ zu einem einschichtigen Zellstoff-Wabenkern 52 sind auch mehrschichtige Zellstoff-Wabenkerne vorsehbar, d.h. ein Verbund aus mehreren Zellstoff-Wabenkernen, der den hier einschichtigen mittleren Zellstoff-Wabenkern 52 ersetzt. Anstatt der unmittelbaren Verklebung der Zellstoff-Wabenkerne 51, 52, 53 über die Kleberschichten 54 kann zwischen mindestens zwei Zellstoff-Wabenkernen 51, 52 bzw. 52, 53 auch eine nicht gezeigte Platte, beispielsweise eine Holz- bzw. Spanplatte vorgesehen werden.

Fig. 7 zeigt nun eine Deckenkonstruktion mit einem in Fig. 6 beispielhaft gezeigten Sandwich-Bauelement 50. Zu erkennen sind in Fig. 7 vier nebeneinander angeordnete Sandwich-Bauelemente 50, wobei zwischen jeweils zwei benachbarten Sandwich-Bauelementen mit einem Füllmaterial 57 ausgegossene Stütz- bzw. Haltebereiche realisiert sind. In dem konkreten Ausführungsbeispiel handelt es sich bevorzugt um ein Beton-Füllmaterial. Zur Herstellung der Deckenkonstruktion werden die einzelnen Sandwich-Bauelemente 50 zunächst bevorzugt aus Hilfs- oder Querträger aufgelegt und zwar mit Abstand zueinander, wobei in den verbleibenden Hohlraum bevorzugt Armierungen eingelegt und der Hohlraum anschließend mit dem Füllmaterial, insbesondere Fließ-Beton ausgegossen wird. Die Hilfs- und Querträger können nach dem Aushärten des Füllmaterials entfernt werden.

In Fig. 8 ist ein alternatives Sandwich-Bauelement 58 in Explosionsdarstellung gezeigt. Dieses umfasst ausschließlich zwei Zellstoff-Wabenkerne 59, 60, die jeweils außen eine Deckschicht 61, 62 tragen, wobei zumindest eine der Deckschichten aus Hochleistungsbeton ausgebildet ist und in die Kanäle des benachbarten Zellstoff-Wabenkerns 59, 60 hineinragt.

Die beiden Zellstoff-Wabenkerne 59, 60 sind nicht unmittelbar miteinander verklebt, was alternativ realisierbar ist, sondern jeweils mit einer Zwischenplatte 63, die als einschichtige oder mehrschichtige Platte, insbesondere Holz- oder Sperrholzplatte ausgebildet sein kann.

Zusätzlich oder alternativ zu der Zwischenplatte 63 können auch weitere Zellstoff-Wabenkerne zwischen den Zellstoff-Wabenkernen 59, 60 aufgenommen sein.

Fig. 9 zeigt nun eine mit den Sandwich-Bauelementen gemäß Fig. 8 hergestellte Wandkonstruktion. Zu erkennen ist, dass die Sandwich-Bauelemente 58 zueinander beabstandet sind und der Abstand wiederum mit Füllmaterial 64 vergossen ist. Bevorzugt handelt es sich bei dem Füllmaterial auch hier um fließfähigen Beton. Als Füllmaterial zum Ausfüllen der Hohlräume in den Konstruktionen gemäß Fig. 7 und 9 eignet sich insbesondere von der Firma Dyckerhoff AG unter der Marke "flowstone" vertriebener Hochleistungsbeton.

### Bezugszeichenliste

- 1: Zellstoff-Wabenkern
- 2: Kanäle
- 3: Hochleistungsbeton
- 4: Schalung
- 5: Schalungstisch
- 6: erste Deckschicht
- 7: zweite Deckschicht
- 8: Sandwich-Bauelement
- 9: Außenfläche
- 10: Außenfläche
- 11: Schmalseite
- 12: Anschlussgeometrie

- 31: Vorrichtung
- 32: Sandwich-Bauelement
- 33: Zuführmittel
- 34: Gipsmaterial
- 35: Gießvorrichtung
- 36: Außenlage
- 37: Förderband
- 38: Förderrichtung
- 39: Aufgießbereich
- 40: Dickenbegrenzungsmittel
- 41: Zellstoff-Wabenkörper
- 42: Imprägniermittelbeschichtung
- 43: Kanäle
- 44: erste Deckschicht
- 45: zweite Deckschicht
- 46: Anschlussgeometrie
- 47: Feder
- 48: Überlappungsplatte
- 49: Abschlussprofil
- 50: Sandwich-Bauelement
- 51: Zellstoff-Wabenkern
- 52: Zellstoff-Wabenkern
- 53: Zellstoff-Wabenkern
- 54: Kleberschichten
- 55: erste Deckschicht
- 56: zweite Deckschicht
- 57: Füllmaterial
- 58: Sandwich-Bauelement
- 59: Zellstoff-Wabenkern
- 60: Zellstoff-Wabenkern
- 61: erste Deckschicht
- 62: zweite Deckschicht
- 63: Zwischenplatte
- 64: Füllmaterial

## Patentansprüche

1. Sandwich-Bauelement, insbesondere Wandelement, umfassend mindestens einen eine Vielzahl von nebeneinander angeordneten Kanälen (2; 43) aufweisenden Zellstoff-Wabenkern (1; 51, 52, 53; 59, 60), der zwischen einer ersten und einer zweiten Deckschicht (6, 7; 44, 45; 55, 56; 61, 62) aufgenommen ist, wobei die Kanäle (2; 43) des Zellstoff-Wabenkerns (1; 51, 52, 53; 59, 60), bevorzugt vollumfänglich und axial durchgehend, mit einer mineralischen Imprägnierbeschichtung auf Zementbasis zum Erhöhen der Feuer- und/oder Wasserfestigkeit und/oder der mechanischen Stabilität beschichtet sind, wobei der Zellstoff-Wabenkern (1; 51, 52, 53; 59, 60) senkrecht zur Flächenerstreckung des Sandwich-Bauelementes (8; 32) in die erste und/oder die zweite Deckschicht (6, 7; 44, 45; 55, 56; 61, 62) hinein ragt und dadurch an der ersten und/oder zweiten Deckschicht (6, 7; 44, 45; 55, 56; 61, 62) festgelegt ist,
**dadurch gekennzeichnet,**
**dass** die erste und/oder die zweite Deckschicht (6, 7; 44, 45; 55, 56; 61, 62) als Beton-Deckschicht aus Hochleistungsbeton ausgebildet sind/ist, und dass sich der Hochleistungsbeton der ersten und/oder zweiten Deckschicht (6, 7; 44, 45; 55, 56; 61, 62) ein Stück weit, mindestens 0,5cm, in die Kanäle (2; 43) des Zellstoff-Wabenkerns (1; 51, 52, 53; 59, 60) hineinerstreckt, derart, dass der Hochleistungsbeton an der mineralischen Imprägnierbeschichtung auf Zementbasis der Kanäle (2; 43) anhaftet.

2. Sandwich-Bauelement nach Anspruch 1,
**dadurch gekennzeichnet,**
**dass** die erste und/oder zweite Deckschicht (14, 15) auf einer von dem Zellstoff-Wabenkern abgewandten Seite eine, insbesondere als Papier- oder Pappe-Lage ausgebildete Außenlage (6; 44) aufweist.

3. Sandwich-Bauelement nach einem der Ansprüche 1 oder 2,
**dadurch gekennzeichnet,**
**dass** die Kanäle (2; 43) mit Wärme- und/oder Schalldämmmaterial gefüllt sind.

4. Sandwich-Bauelement nach einem der vorhergehenden Ansprüche,
**dadurch gekennzeichnet,**
**dass** in der ersten und/oder zweiten Deckschicht (6, 7; 44, 45; 55, 56; 61, 62) Armierungsmaterial, insbesondere Fasern und/oder Netze, vorgesehen sind/ist.

5. Sandwich-Bauelement nach einem der vorhergehenden Ansprüche,
**dadurch gekennzeichnet,**
**dass** das Sandwich-Bauelement (8; 32; 50; 58), insbesondere an mindestens einer Schmalseite (11), eine Anschlussgeometrie (12; 46) zur, insbesondere überlappenden Nebeneinanderanordnung von mehreren Sandwich-Bauelementen (8; 32; 50; 58), beispielsweise eine Nut- und/oder Federgeometrie aufweist.

6. Sandwich-Bauelement nach Anspruch 5,
**dadurch gekennzeichnet,**
**dass** die Anschlussgeometrie (12; 46) aus Beton ausgebildet ist und fest mit der ersten und/oder zweiten Deckschicht (6, 7; 44, 45; 55, 56; 61, 62) verbunden oder einteilig mit der ersten und/oder zweiten Deckschicht (6, 7; 44, 45; 55, 56; 61, 62) ausgebildet ist.

7. Verfahren zum Herstellen eines Sandwich-Bauelementes nach einem der Ansprüche 1 bis 6 mit den Schritten:
• Bereitstellen eines Zellstoff-Wabenkern (1; 51, 52, 53; 59, 60), umfassend eine Vielzahl von nebeneinander angeordneten Kanälen (2; 43) die mit einer Imprägnierbeschichtung auf Zementbasis beschichtet sind;
• Verbinden des Zellstoff-Wabenkerns (1; 51, 52, 53; 59, 60) mit einer ersten und einer zweiten Deckschicht (6, 7; 44, 45; 55, 56; 61, 62);
**dadurch gekennzeichnet,**
**dass** die erste und/oder zweite Deckschicht (6, 7; 44, 45; 55, 56; 61, 62) als Beton-Deckschicht aus Hochleistungsbeton, und dass der Zellstoff-Wabenkern (1; 51, 52, 53; 59, 60) dadurch mit der ersten und/oder zweiten Deckschicht (6, 7; 44, 45; 55, 56; 61, 62) verbunden wird, dass der Zellstoff-Wabenkern (1; 51, 52, 53; 59, 60) mit dem noch nicht ausgehärteten, insbesondere noch fließfähigen Hochleistungsbeton der ersten und/oder zweiten Deckschicht (6, 7; 44, 45; 55, 56; 61, 62) zusammengebracht wird, derart, dass der Zellstoff-Wabenkern (1; 51, 52, 53; 59, 60) in den Beton mindestens 0,5cm hineinragt, und der Hochleistungsbeton dann abbindet und an der mineralischen Imprägnierbeschichtung auf Zementbasis der Kanäle anhaftet.

8. Verfahren nach Anspruch 7,
**dadurch gekennzeichnet,**
**dass** fließfähiger Hochleistungsbeton in einer Schalung (4), insbesondere auf einem Schalungstisch (5), bereitgestellt wird und der Zellstoff-Wabenkern (1; 51, 52, 53; 59, 60) abschnittsweise in den Hochleistungsbeton eingetaucht wird, insbesondere durch mechanisches Eindrücken und/oder durch Vibration, bevorzugt nachdem der Zellstoff-Wabenkern (1; 51, 52, 53; 59, 60) auf den Hochleistungsbeton aufgelegt wurde, und/oder dass der Zellstoff-Wabenkern (1; 51, 52, 53; 59, 60) in einer Schalung (4) positioniert und die Schalung (4) dann mit Hochleistungsbeton derart gefüllt wird, dass der Zellstoff-Wabenkern (1; 51, 52, 53; 59, 60) abschnittsweise in den Hochleistungsbeton hineinragt.

9. Verfahren nach einem der Ansprüche 7 oder 8,
**dadurch gekennzeichnet,**
**dass** fließfähiges Gipsmaterial (4) zur Herstellung der ersten oder zweiten Deckschicht (14, 15), bevorzugt auf ein Förderband (7; 45), noch weiter bevorzugt auf eine, insbesondere auf einem Förderband (7, 45) angeordnete Außenlage (6; 44), bevorzugt aus Papier- oder Pappe, bereitgestellt wird, und dass der Zellstoff-Wabenkern abschnittsweise in das Gipsmaterial (4) eingetaucht wird, insbesondere durch mechanischen Eindrücken und/oder durch Vibration und/oder dass der Zellstoff-Wabenkern (1; 51, 52, 53; 59, 60) positioniert und dann mit Gipsmaterial (4) umgossen wird, so dass der Zellstoff-Wabenkern abschnittsweise in das Gipsmaterial (4) hineinragt.

10. Verfahren nach einem der Ansprüche 7 bis 9,
**dadurch gekennzeichnet,**
**dass** zuerst die erste Deckschicht (6; 44) mit dem Zellstoff-Wabenkern (1; 51, 52, 53; 59, 60) verbunden und nach dem zumindest teilweise Abbinden des die erste Deckschicht bildenden Betons die zweite Deckschicht (7; 45) mit dem Zellstoff-Wabenkern (1; 51, 52, 53; 59, 60) verbunden wird.

11. Verfahren nach einem der Ansprüche 7 bis 10,
**dadurch gekennzeichnet,**
**dass** der Zellstoff-Wabenkern (1; 51, 52, 53; 59, 60) so positioniert wird, dass der Hochleistungsbeton zumindest eine Schmalseite (11) des Wabenkerns abschnittsweise überdeckt und nach dem Aushärten eine Abschlussgeometrie (12; 46) bildet.

12. Verfahren nach einem der Ansprüche 9 bis 11,
**dadurch gekennzeichnet,**
**dass** das Gipsmaterial (4) der ersten oder zweiten Deckschicht (14, 15) zur Gewährleistung einer konstanten Deckschichtdicke vor dem Einbringen des Zellstoff-Wabenkerns abgerakelt wird.

13. Verfahren nach einem der Ansprüche 7 bis 12,
**dadurch gekennzeichnet,**
**dass** die zementhaltige Imprägnierbeschichtung, bevor der Zellstoff-Wabenkern (1; 51, 52, 53; 59, 60) vor dem Zusammenbringen mit dem noch nicht ausgehärteten Hochleistungsbeton noch zumindest feucht ist oder alternativ schon trocken ist.

14. System, umfassend mindestens zwei nebeneinander angeordnete Sandwich-Bauelemente nach einem der Ansprüche 1 bis 6, wobei die Sandwich-Bauelemente bevorzugt über eine Anschlussgeometrie (12; 46) der Sandwich-Bauelemente miteinander verbunden sind.

15. System nach Anspruch 14,
**dadurch gekennzeichnet,**
**dass** die zwei Sandwich-Bauelemente beabstandet zueinander angeordnet und über eine Vergussmasse, insbesondere Beton fest miteinander verbunden sind.

## Claims

1. Structural sandwich element, in particular wall element, comprising at least one cellulose honeycomb core (1; 51, 52, 53; 59, 60) having a plurality of adjacent channels (2; 43) which is accommodated between a first and a second cover layer (6, 7; 44, 45; 55, 56; 61, 62), wherein the channels (2; 43) of the cellulose honeycomb core (1; 51, 52, 53; 59, 60) are preferably fully circumferentially and axially continuously coated with a mineral, cement-based impregnation coating for increasing the fire and/or water resistance and/or the mechanical stability, wherein the cellulose honeycomb core (1; 51, 52, 53; 59, 60) protrudes perpendicular to the surface extent of the structural sandwich element (8; 32) into the first and/or second cover layer (6, 7; 44, 45; 55, 56; 61, 62) and thus is attached at the first and/or second cover layer (6, 7; 44, 45; 55, 56; 61, 62),
**characterized in that**
the first and/or second cover layer (6, 7; 44, 45; 55, 56; 61, 62) is/are formed as a concrete cover layer from high-performance concrete and **in that** the high-performance concrete of the first and/or second cover layer (6, 7; 44, 45; 55, 56; 61, 62) extends somewhat, at least 0.5 cm into the channels (2; 43) of the cellulose honeycomb core (1; 51, 52, 53; 59, 60) in such a way that the high-performance concrete adheres to the mineral, cement-based impregnation coating of the channels (2; 43).

2. Structural sandwich element according to claim 1,
**characterized in that**
the first and/or second cover layer (14, 15) comprises an outer layer (6; 44) in particular configured as a paper or cardboard layer on a side facing away from the cellulose honeycomb core.

3. Structural sandwich element according to one of claims 1 or 2,
**characterized in that**
the channels (2; 43) are filled with thermal and/or sound insulating material.

4. Structural sandwich element according to any one of the preceding claims,
**characterized in that**
reinforcement material, in particular fibers and/or meshes, are provided in the first and/or second cover layer (6, 7; 44, 45; 55, 56; 61, 62).

5. Structural sandwich element according to any one of the preceding claims,
**characterized in that**
the structural sandwich element (8; 32; 50; 58), in particular on at least one narrow side (11), has a connection geometry (12; 46), for example a groove and/or spring geometry, for the, in particular overlapping, adjacent arrangement of multiple structural sandwich elements (8; 32; 50; 58).

6. Structural sandwich element according to claim 5,
**characterized in that**
the connection geometry (12; 46) is formed from concrete and fixedly connected to the first and/or second cover layer (6, 7; 44, 45; 55, 56; 61, 62) or is formed in one piece with the first and/or second cover layer (6, 7; 44, 45; 55, 56; 61, 62).

7. Method for producing a structural sandwich element according to one of claims 1 to 6 with the steps:
• Providing a cellulose honeycomb core (1; 51, 52, 53; 59, 60) comprising a plurality of adjacently-arranged channels (2; 43) which are coated with a cement-based impregnation coating;
• Connecting the cellulose honeycomb core (1; 51, 52, 53; 59, 60) comprising a first and a second cover layer (6, 7; 44, 45; 55, 56; 61, 62);
**characterized in that**
the first and/or second cover layer (6, 7; 44, 45; 55, 56; 61, 62) is formed as concrete cover layer from high-performance concrete and **in that** the cellulose honeycomb core (1; 51, 52, 53; 59, 60) is connected to the first and/or second cover layer (6, 7; 44, 45; 55, 56; 61, 62) in such a way, that the cellulose honeycomb core (1; 51, 52, 53; 59, 60) is brought together with the not yet cured, in particular still pourable high-performance concrete of the first and/or second cover layer (6, 7; 44, 45; 55, 56; 61, 62) in such a way that the cellulose honeycomb core (1; 51, 52, 53; 59, 60) protrudes at least 0.5 cm into the concrete, and that then the high-performance concrete sets and adheres at the mineral, cement-based impregnation coating of the channels.

8. Method according to claim 7,
**characterized in that**
pourable high-performance concrete is provided in a formwork (4), in particular on a formwork table (5) and the cellulose honeycomb core (1; 51, 52, 53; 59, 60) is immersed into the high-performance concrete in sections, in particular by mechanically pressing in and/or by vibration, preferably after the cellulose honeycomb core (1; 51, 52, 53; 59, 60) was placed on the high-performance concrete, and/or **in that** the cellulose honeycomb core (1; 51, 52, 53; 59, 60) is positioned in a formwork (4) and the formwork (4) is then filled with high-performance concrete in such a way that the cellulose honeycomb core (1; 51, 52, 53; 59, 60) protrudes into the high-performance concrete in sections.

9. Method according to one of claims 7 or 8,
**characterized in that**
pourable gypsum material (4) for producing the first or second cover layer (14, 15) is preferably provided on a conveyor belt (7; 45), further preferably on an outer layer (6; 44) in particular arranged on a conveyor belt (7; 45), preferably from paper or cardboard, and **in that** the cellulose honeycomb core is dipped into the gypsum material (4) in sections, in particular by mechanically pressing in and/or by vibration, and/or **in that** the cellulose honeycomb core (1; 51, 52, 53; 59, 60) is positioned and then poured around with the gypsum material (4) so that the cellulose honeycomb core protrudes into the gypsum material (4) in sections.

10. Method according to one of claims 7 to 9,
**characterized in that**
at first the first cover layer (6; 44) is connected to the cellulose honeycomb core (1; 51, 52, 53; 59, 60) and after the at least partial setting of the concrete forming the first cover layer, the second cover layer (7; 45) is connected to the cellulose honeycomb core (1; 51, 52, 53; 59, 60).

11. Method according to one of claims 7 to 10,
**characterized in that**
the cellulose honeycomb core (1; 51, 52, 53; 59, 60) is positioned in such a way that the high-performance concrete covers at least one narrow side (11) of the honeycomb core in sections, and after curing forms a connection geometry (12; 46).

12. Method according to one of claims 9 to 11,
**characterized in that**
the gypsum material (4) of the first or second cover layer (14, 15) is scraped prior to introduction of the cellulose honeycomb core in order to ensure a constant thickness of the cover layer.

13. Method according to one of claims 7 to 12,
**characterized in that**
the cement-based impregnation coating, prior to combining the cellulose honeycomb core (1; 51, 52, 53; 59, 60) with the not yet cured high-performance concrete, is at least still moist or, as an alternative, already dry.

14. System comprising at least two structural sandwich-elements arranged next to one another according to one of claims 1 to 6, wherein the structural sandwich elements are preferably connected to one another via a connection geometry (12; 46) of the structural sandwich elements.

15. System according to claim 14,
**characterized in that**
the two structural sandwich elements are arranged spaced apart from one another and are fixedly connected to one another via a potting material, in particular concrete.

## Revendications

1. Elément de construction sandwich, en particulier élément de mur, comprenant au moins un noyau à nid d'abeilles en cellulose (1; 51, 52, 53; 59, 60) présentant une multiplicité de canaux juxtaposés (2; 43), qui est placé entre une première et une deuxième couches de recouvrement (6, 7; 44, 45; 55, 56; 61, 62), dans lequel les canaux (2; 43) du noyau à nid d'abeilles en cellulose (1; 51, 52, 53; 59, 60) sont revêtus, de préférence de façon continue sur tout le pourtour et axialement, avec un revêtement d'imprégnation minéral à base de ciment pour augmenter la résistance au feu et/ou à l'eau et/ou la stabilité mécanique, dans lequel le noyau à nid d'abeilles en cellulose (1; 51, 52, 53; 59, 60) pénètre perpendiculairement à l'extension de surface de l'élément de construction sandwich (8; 32) dans la première et/ou dans la deuxième couche de recouvrement (6, 7; 44, 45; 55, 56; 61, 62) et est ainsi fixé à la première et/ou à la deuxième couche de recouvrement (6, 7; 44, 45; 55, 56; 61, 62),
**caractérisé en ce que** la première et/ou la deuxième couche de recouvrement (6, 7; 44, 45; 55, 56; 61, 62) est/sont constituée(s) par une couche de recouvrement de béton en béton à haute performance et **en ce que** le béton à haute performance de la première et/ou de la deuxième couche de recouvrement (6, 7; 44, 45; 55, 56; 61, 62) pénètre légèrement, d'au moins 0,5 cm, dans les canaux (2; 43) du noyau à nid d'abeilles en cellulose (1; 51, 52, 53; 59, 60), de telle manière que le béton à haute performance adhère au revêtement d'imprégnation minéral à base de ciment des canaux (2; 43).

2. Elément de construction sandwich selon la revendication 1, **caractérisé en ce que** la première et/ou la deuxième couche de recouvrement (14, 15) présente, sur un côté opposé au noyau à nid d'abeilles en cellulose, une couche extérieure (6; 44) formée en particulier par une couche de papier ou de carton.

3. Elément de construction sandwich selon une des revendications 1 ou 2, **caractérisé en ce que** les canaux (2; 43) sont remplis d'un matériau d'isolation thermique et/ou phonique.

4. Elément de construction sandwich selon l'une quelconque des revendications précédentes, **caractérisé en ce qu'**il est prévu dans la première et/ou dans la deuxième couche de recouvrement (6, 7; 44, 45; 55, 56; 61, 62) un matériau d'armature, en particulier des fibres et/ou des treillis.

5. Elément de construction sandwich selon l'une quelconque des revendications précédentes, **caractérisé en ce que** l'élément de construction sandwich (8; 32; 50; 58) présente, en particulier sur au moins un côté étroit (11), une géométrie de raccordement (12; 46) avec l'agencement juxtaposé en particulier à recouvrement de plusieurs éléments de construction sandwich (8; 32; 50; 58), par exemple une géométrie à rainure et languette.

6. Elément de construction sandwich selon la revendication 5, **caractérisé en ce que** la géométrie de raccordement (12; 46) est réalisée en béton et est assemblée solidement à la première et/ou à la deuxième couche de recouvrement (6, 7; 44, 45; 55, 56; 61, 62) ou est réalisée d'une seule pièce avec la première et/ou la deuxième couche de recouvrement (6, 7; 44, 45; 55, 56; 61, 62).

7. Procédé de fabrication d'un élément de construction sandwich selon l'une quelconque des revendications 1 à 6, comprenant les étapes suivantes:
• préparer un noyau à nid d'abeilles en cellulose (1; 51, 52, 53; 59, 60), comprenant une multiplicité de canaux juxtaposés (2; 43), qui sont revêtus avec un revêtement d'imprégnation à base de ciment;
• assemblage du noyau à nid d'abeilles en cellulose (1; 51, 52, 53; 59, 60) avec une première et/ou une deuxième couche de recouvrement (6, 7; 44, 45; 55, 56; 61, 62);
**caractérisé en ce que** la première et/ou la deuxième couche de recouvrement (6, 7; 44, 45; 55, 56; 61, 62) est/sont constituée(s) par une couche de recouvrement de béton en béton à haute performance et **en ce que** le noyau à nid d'abeilles en cellulose (1; 51, 52, 53; 59, 60) est assemblé à la première et/ou la deuxième couche de recouvrement (6, 7; 44, 45; 55, 56; 61, 62) par le fait que le noyau à nid d'abeilles en cellulose (1; 51, 52, 53; 59, 60) est relié au béton à haute performance pas encore durci, de préférence encore fluide, de la première et/ou de la deuxième couche de recouvrement (6, 7; 44, 45; 55, 56; 61, 62), de telle manière que le noyau à nid d'abeilles en cellulose (1; 51, 52, 53; 59, 60) pénètre d'au moins 0,5 cm dans le béton et que le béton à haute performance durcisse ensuite et adhère au revêtement d'imprégnation minéral à base de ciment des canaux.

8. Procédé selon la revendication 7, **caractérisé en ce que** l'on prépare un béton à haute performance fluide dans un coffrage (4), en particulier sur une table de coffrage (5) et on plonge le noyau à nid d'abeilles en cellulose (1; 51, 52, 53; 59, 60) par parties dans le béton à haute performance, en particulier par pression mécanique et/ou par vibration, de préférence après que le noyau à nid d'abeilles en cellulose (1; 51, 52, 53; 59, 60) ait été déposé sur le béton à haute performance, et/ou **en ce que** le noyau à nid d'abeilles en cellulose (1; 51, 52, 53; 59, 60) est positionné dans un coffrage (4) et le coffrage (4) est ensuite rempli avec du béton à haute performance, de telle manière que le noyau à nid d'abeilles en cellulose (1; 51, 52, 53; 59, 60) pénètre par parties dans le béton à haute performance.

9. Procédé selon une des revendications 7 ou 8, **caractérisé en ce que** l'on prépare un matériau de plâtre fluide (4) pour la fabrication de la première ou de la deuxième couche de recouvrement (14, 15), de préférence sur une bande transporteuse (7; 45), de préférence encore sur une couche extérieure (6; 44), de préférence en papier ou en carton, disposée en particulier sur une bande transporteuse (7, 45), et **en ce que** l'on plonge le noyau à nid d'abeilles en cellulose par parties dans le matériau de plâtre (4), en particulier par pression mécanique et/ou par vibration et/ou **en ce que** l'on positionne le noyau à nid d'abeilles en cellulose (1; 51, 52, 53; 59, 60) et on l'enrobe ensuite avec du matériau de plâtre (4), de telle manière que le noyau à nid d'abeilles en cellulose pénètre au moins par parties dans le matériau de plâtre (4).

10. Procédé selon l'une quelconque des revendications 7 à 9, **caractérisé en ce que** la première couche de recouvrement (6; 44) est d'abord reliée au noyau à nid d'abeilles en cellulose (1; 51, 52, 53; 59, 60) et la deuxième couche de recouvrement (7; 45) est reliée au noyau à nid d'abeilles en cellulose (1; 51, 52, 53; 59, 60) après le durcissement au moins partiel du béton formant la première couche de recouvrement.

11. Procédé selon l'une quelconque des revendications 7 à 10, **caractérisé en ce que** l'on positionne le noyau à nid d'abeilles en cellulose (1; 51, 52, 53; 59, 60) de telle manière que le béton à haute performance recouvre par parties au moins un côté étroit (11) du noyau à nid d'abeilles et forme après le durcissement une géométrie de raccordement (12; 46).

12. Procédé selon l'une quelconque des revendications 9 à 11, **caractérisé en ce que** le matériau de plâtre (4) de la première ou de la deuxième couche de recouvrement (14, 15) est raclé pour garantir une épaisseur de couche de recouvrement constante avant la pose du noyau à nid d'abeilles en cellulose.

13. Procédé selon l'une quelconque des revendications 7 à 12, **caractérisé en ce que** la couche d'imprégnation contenant du ciment est encore au moins humide ou en variante est déjà sèche avant que le noyau à nid d'abeilles en cellulose (1; 51, 52, 53; 59, 60) soit relié au béton à haute performance qui n'est pas encore durci.

14. Système, comprenant au moins deux éléments de construction sandwich selon l'une quelconque des revendications 1 à 6 disposés l'un à côté de l'autre, dans lequel les éléments de construction sandwich sont assemblés de préférence au moyen d'une géométrie de raccordement (12; 46) des éléments de construction sandwich l'un à l'autre.

15. Système selon la revendication 14, **caractérisé en ce que** les deux éléments de construction sandwich sont disposés à distance l'un de l'autre et sont reliés solidement l'un à l'autre par une masse de coulée, en particulier du béton.
